# EUROPÄISCHE PATENTSCHRIFT

(11) **EP 0 670 341 B1**
(45) Veröffentlichungstag und Bekanntmachung des Hinweises auf die Patenterteilung: **22.09.1999**
(21) Anmeldenummer: 95102764.8
(22) Anmeldetag: 27.02.1995
(51) Int. Cl.: C08G 65/32, C08F 299/02

(54) **Prepolymere und daraus hergestellte radikalisch polymerisierbare Zubereitungen sowie Verfahren zu ihrer Herstellung**
Prepolymers, radically polymerisable preparations therefrom, and process for their preparation
Prépolymères, préparations polymérisables radicalairement de ceux-ci et procédé de leur préparation

(30) Priorität: 02.03.1994 DE 4406858
(43) Veröffentlichungstag der Anmeldung: 06.09.1995
(73) Patentinhaber: DELO Industrieklebstoffe GmbH & Co. KG, 86899 Landsberg (DE)
(72) Erfinder: Eckhardt, Gunther, Dr., D-82346 Frieding (DE); Lechner, Günther, Dr., D-82237 Wörthsee/Steinebach (DE)
(74) Vertreter: Bunke, Holger, Dr.rer.nat. Dipl.-Chem.

(56) Entgegenhaltungen:
- EP-A- 0 297 686
- PATENT ABSTRACTS OF JAPAN, unexamined applications, C Field, Band 16, Nr. 466, 28. September 1992, THE PATENT OFFICE JAPANESE GOVERNMENT Seite 6 C 989; & JP-A-04 164 910 (MITSUBISHI RAYON CO. LTD.)

## Beschreibung

Die Erfindung betrifft Prepolymere und daraus hergestellte Zubereitungen, die durch mittels freier Radikale initiierter Polymerisation aushärten.

Insbesondere betrifft die Erfindung Prepolymere mit Acryl- oder Methacrylendgruppen auf der Grundlage von gemischten Polyethern mit Molmassen von 4.000 bis 20.000 g/mol sowie Verfahren zu ihrer Herstellung.

Die Verwendung von Dimethacrylaten von Polyalkoxypolyolen in polymerisierenden Zubereitungen, wie beispielsweise anaerob härtenden Klebstoffen ist seit langem beispielsweise aus den US-Patenten 2 895 950 und 3 041 322 bekannt.

Die Verwendung von Dimethacrylaten des Ethylenglykols, Diethylenglykols, Triethylenglykols oder Tetraethylenglykols ergibt ausgehärtete Klebstoffilme, die eine sehr hohe Sprödigkeit besitzen. Bei Verwendung von Dimethacrylaten von Polyglykolen mit sehr hohen Molmassen kann zwar eine gewisse Flexibilisierung erreicht werden, gleichzeitig steigt aber das Wasseraufnahmevermögen des ausgehärteten Klebfilms sehr stark an, was zu einer verminderten Klimabeständigkeit der Verklebung führt.

Durch die Verwendung von Polypropylenglykol(meth-)acrylaten kann die Klimabeständigkeit von Verklebungen erhöht werden, jedoch vermindert sich der innere Zusammenhalt des Klebstoffes sehr stark und in der Folge dieser Kohäsionsminderung verringern sich auch die Verbundfestigkeiten von Verklebungen.

Die Verwendung von Diacrylaten oder Dimethacrylaten auf der Grundlage von Polybutylenglykol bzw. den Polymerisaten des Tetrahydrofurans führt meist zu gut klimabeständigen Verbindungen mit einer relativ geringen Wasseraufnahmefähigkeit. Nachteilig bei diesen Prepolymeren ist der Umstand, daß nur eine begrenzte Verträglichkeit mit anderen üblicherweise in Klebstoffzubereitungen verwendeten Zusatzstoffen wie beispielsweise Hochpolymeren vorliegt und außerdem die Poly(tetramethylenoxy)-Derivate zum Auskristallisieren neigen.

Zur Variation des Eigenschaftsbildes von Polyethern bzw. den daraus gefertigten Polymeren wie beispielsweise Polyurethanen kann man gemischte Polyether durch ionische Polymerisation geeigneter Ausgangsmonomerer herstellen. Solche vorzugsweise ionisch polymerisierbaren cyclischen Verbindungen sind beispielsweise Ethylenoxid, Propylenoxid, Butan-1-oxid, Tetrahydrofuran, Dioxan, Cyclohexenoxid, Styroloxid, β-Propiolacton, Dimethylcyclopolysiloxane, Vinyltetrahydrofuran, Glycidether und andere. Die gemischten Polyether auf der Basis von Ethylenoxid, Propylenoxid und Tetrahydrofuran in unterschiedlichen Verhältnissen dieser Monomeren werden in weitem Umfang beispielsweise zur Herstellung von Polyurethanen verwendet.

Es bestehen mehrere Möglichkeiten, aus den primär hergestellten Polyalkoxypolyolen radikalisch polymerisierbare Verbindungen zu machen. Ein bekannter Weg ist beispielsweise die Umsetzung von Polyalkoxydiolen mit mindestens 2 Isocyanatgruppen enthaltenden Verbindungen und die nachfolgende Umsetzung der verbleibenden Isocyanatgruppen mit einer Verbindung mit leicht beweglichem Wasserstoff wie z. B. Hydroxyalkylmethacrylat oder Aminomethacrylat. Über diesen Weg sind Prepolymere zugänglich, wie sie beispielsweise in den japanischen Auslegeschriften JP 92-032785 oder JP 88-010548 beschrieben sind.

Für die Herstellung dieser radikalisch polymerisierbaren Prepolymeren ist ein komplizierter mehrstufiger Prozeß notwendig, der zu relativ teuren Produkten führt.

Aus EP-A-0 297 686 ist die Verwendung eines Polymernetzwerkes bekannt, das ein Poly(meth)acrylat enthält, welches durch Oligomerketten verbunden ist, die chemisch gebundene Ethylenoxid-Einheiten als hydratisierbare Gruppen enthalten, wobei die Ethylenoxid-Einheiten in Form von Oligomerblöcken aus 5 bis 200 Einheiten vorliegen. Die Oligomerketten können zusätzlich andere aliphatische Alkylenoxideinheiten, z.B. Propylenoxid- und/oder Tetramethylenoxid-Einheiten, enthalten. Diese (meth)acrylierten Blockcopolyether-Derivate zeichnen sich durch eine ausgeprägte Hydrophilie aus und lassen sich insbesondere zur Herstellung von Kontaktlinsen sowie zum Imprägnieren und Beschichten von Substraten verwenden.

Aus JP-A-4/164910 sind Polymerengemische aus 10 bis 90 Gew.-Teilen eines Prepolymers bekannt, dessen Mischpolyetheranteil ausschließlich aus unsubstituierten und substituierten Tetramethylenoxid-Einheiten besteht, wobei die Gesamtkette mindestens 5 und höchstens 20 Alkylenoxid-Einheiten enthält.

Die zweite Komponente, die den Rest auf 100 Gew.-Teile ausmacht, ist ein nicht näher bezeichnetes Urethan-Poly(meth)acrylat, und zusätzlich können gegebenenfalls 0 bis 80 Gew.-Teile einer weiteren polymerisierbaren Verbindung enthalten sein. Die Gegenwart des Prepolymers neben der zweiten Komponente führt zu einem guten Kompromiß zwischen Flexibilität und Hygroskopie ohne negative Auswirkungen auf andere Eigenschaften.

Zubereitungen für das Verkleben, das Abdichten, Beschichten und Vergießen müssen für sehr viele Anwendungen als ausgehärtete Massen eine hohe Flexibilität bei ausreichender Kohäsion des Klebstoffilms besitzen. Die Erfüllung dieser Forderung ist besonders dann von großer Bedeutung, wenn Substrate mit stark unterschiedlichem linearen Ausdehnungskoeffizienten miteinander verbunden werden sollen und die Verbindung starken Temperaturwechseln ausgesetzt wird.

Die Aufgabe der Erfindung besteht demnach in der Schaffung eines Prepolymeren, das radikalisch polymerisierbar ist und den ausgehärteten Zubereitungen eine hohe Flexibilität bei ausreichender Kohäsion verleiht, das in einfacher Weise herstellbar ist und zu Zubereitungen führt, die sich durch eine hohe Lagerstabilität und eine fehlende Neigung zur Kristallisation bei üblichen Lagertemperaturen auszeichnen.

Diese Aufgabe wird erfindungsgemäß gelöst durch Prepolymere und daraus hergestellte radikalisch polymerisierbare Zubereitungen, die insbesondere für das Verkleben, Abdichten, Vergießen und Beschichten von Substraten, vor allem aus Glas, Metall und/oder Kunststoff, verwendet werden können. Die erfindungsgemäßen Prepolymere sind acrylierte und/oder methacrylierte Mischpolyether der allgemeinen Formel 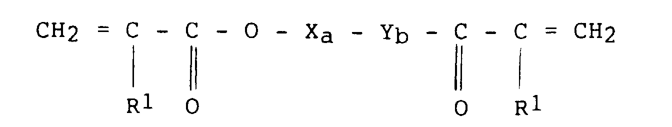 mit Molmassen von 4.000 bis 20.000,
worin
X und Y verschieden sind und jeweils eine Ethergruppe der Formel 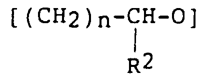 und
- R¹ =: H, Methyl
- R² =: H, Alkyl
- n =: eine ganze Zahl von 1 bis 5 und
- a, b =: jeweils eine ganze Zahl von 50 bis 500
bedeuten, wobei die Mischpolyether Tetramethylenoxy-Einheiten im Molekülgerüst enthalten, und zwar zu einem Anteil von 50 bis 95 Masse-%.

Der Anteil dieser Prepolymere in den erfindungsgemäßen Zubereitungen beträgt 5 bis 99 %, bezogen auf die Gesamtmasse der jeweiligen Zubereitung.

Die Mischpolyether werden beispielsweise durch kationische Polymerisation, unter katalytischer Wirkung von Borfluorid-Etheraten hergestellt.

Als Monomere werden bevorzugt Ethylenoxid, Propylenoxid und Tetrahydrofuran verwendet.

Nach einer bevorzugten Ausführungsform der Erfindung wird zur Herstellung der Prepolymeren von Mischpolyethern bzw. Mischpolyetherdiolen aus Ethylenoxid und Tetrahydrofuran ausgegangen, wobei das Molverhältnis dieser Monomeren 1 : 2,5 bis 1 : 5 und besonders bevorzugt 1 : 3 bis 1 : 4 beträgt.

Vorzugsweise enthalten die erfindungsgemäßen Prepolymere Tetramethylenoxy-Einheiten im Molekülgerüst zu einem Anteil von 70 bis 90 Masse-%.

Bei dem erfindungsgemäßen Verfahren zur Herstellung der Prepolymere werden die Mischpolyetherdiole mit doppelbindungshaltigen Monomercarbonsäuren, deren Anhydriden oder Säurehalogeniden bei Temperaturen von 10 bis 120°C in Gegenwart oder in Abwesenheit von Katalysatoren umgesetzt. Dabei haben sich insbesondere die Acylierungsmittel Acrylsäure, Diacrylsäure, Methacrylsäure und Methacrylsäureanhydrid bewährt.

Besonders bevorzugte Acylierungsmittel sind Acrylsäure und Methacrylsäureanhydrid. Die Acylierung kann unter Verwendung geeigneter Katalysatoren bei Temperaturen von 20 bis 50°C und besonders bevorzugt bei 25 bis 30°C ausgeführt werden. Das Molverhältnis zwischen Polyetherdiol einerseits und Acrylsäure oder Methacrylsäureanhydrid andererseits beträgt dabei vorzugsweise 1 : 1 bis 1 : 5.

Als Katalysatoren können Oxide/Hydroxide und Carbonate der Elemente der 1. und 2. Hauptgruppe des Periodensystems, sowie Salze verwendet werden, die diese Elemente enthalten. Bevorzugt verwendete Katalysatoren sind die Acrylate und/ oder Methacrylate der Alkalimetalle, wobei Natrium-methacrylat mit besonderem Vorteil eingesetzt wird und zwar in einer Konzentration von 0,05 bis 20 Masseteilen, in Prozent des Acylierungsmittels.

Die Umsetzung kann titrimetrisch verfolgt werden und ist je nach den gewählten Bedingungen nach 2 bis 100 Stunden beendet.

Das Reaktionsgemisch kann nach beendeter Reaktion durch Nachbehandlungsschritte für den Einsatz in den radikalisch polymerisierenden Zubereitungen vorbereitet werden: Beispielsweise kann überschüssige Säure und der Katalysator durch Waschen mit verdünnter Natriumbikarbonatlösung oder Wasser entfernt werden.

Dem meist mehrmaligen Waschen folgen Trocknungsschritte wie beispielsweise Azeotropdestillation mit Toluol.

Nach einer besonders bevorzugten Ausführungsform der Erfindung wird das Reaktionsgemisch ohne weitere Nachbehandlungsschritte eingesetzt, was ökonomisch sehr günstig ist und sich nicht nachteilig auf die Eigenschaften der daraus gefertigten Zubereitungen auswirkt.

Beim Einsatz der erfindungsgemäßen Prepolymeren in radikalisch polymerisierenden Zubereitungen ist es unerheblich, ob die Bildung freier Radikale durch den homolytischen Zerfall von peroxidischen Verbindungen oder Diazoverbindungen, durch einen Redox-induzierten Zerfall von Peroxiden, durch strahlungsinduzierten Zerfall geeigneter Photoinitiatoren oder durch hochenergetische Strahlung erfolgt.

In allen genannten Fällen der Radikalbildung werden unter Verwendung der erfindungsgemäßen Prepolymeren in geeigneter Konzentration Zubereitungen zugänglich, deren ausgehärtete Filme sich durch eine hohe Flexibilität auszeichnen.

Zur Herstellung der erfindungsgemäßen Zubereitungen werden vorzugsweise eingesetzt, jeweils bezogen auf die Gesamtmasse der Zubereitung:
a) 5 bis 60 % mindestens eines erfindungsgemäßen Prepolymers mit Molmassen von 4000 bis 8000 g/mol;
b) radikalisch polymerisierbare Säuremonomere;
c) radikalisch polymerisierbare Verdünner- und/ oder Vernetzermonomere, wobei letztere vorzugsweise mindestens 2 (Meth-)acrylatgruppen im Molekül enthalten;
d) Radikalbildner oder zur Bildung freier Radikale befähigte Redoxsysteme wie Diacylperoxide, Bisacylphosphinoxide oder Cumolhydroperoxid, gegebenenfalls zusammen mit tertiären aromatischen Aminen wie N,N-Dimethyl-p-toluidin oder mit Saccharin;
e) Haftvermittler, Stabilisatoren, Inhibitoren, Komplexbildner, übliche Hilfs- und Zusatzstoffe, beispielsweise γ-Glycidyloxypropyltrimethoxysilan, feindisperse Kieselsäure, oder Gemische eines Teils oder sämtlicher dieser Zusätze.

Die Erfindung wird anhand der nachfolgenden Ausführungsbeispiele näher erläutert:

### Beispiel 1 (Prepolymer)

Ein Mischpolyetherdiol, hergestellt durch kationische Copolymerisation von Ethylenoxid und Tetrahydrofuran, mit einer Molmasse von 6100 g/mol und einem Molverhältnis der eingebauten Monomereinheiten Ethylenoxid und Tetrahydrofuran von 1 : 3,6 wurde bei 25°C mit Methacrylsäureanhydrid umgesetzt. Das Molverhältnis Diol zu Anhydrid betrug 1 : 2. Als Katalysator wurde Na-methacrylat in einer Konzentration von 3 Masseteile in Prozent, bezogen auf Anhydrid, verwendet.

Die Reaktion war nach 72 Stunden beendet. Im IR-Spektrum des Umsetzungsproduktes waren keine OH-Gruppen nachweisbar. Die Konzentration der entstandenen Methacrylsäure wurde zu 2,5 Masseteile in Prozent, bezogen auf das Reaktionsgemisch, ermittelt.

Das Reaktionsgemisch wurde durch Dekantieren vom Bodensatz abgetrennt und ohne weitere Nachbehandlungsschritte zur Herstellung der nachfolgend beschriebenen Zubereitungen eingesetzt.

### Beispiel 2 (Zubereitung)

Es wurde eine lichtinduziert härtende Zubereitung durch Vermischen folgender Bestandteile hergestellt (Prozentangaben beziehen sich auf die Gesamtmasse der Zubereitung):
- 43,1 % Prepolymer gemäß Beispiel 1
- 45,1 % Isobornylacrylat
- 4,9 % Diacrylsäure
- 1 % Bisacylphosphinoxid
- 6,1 % feindisperse Kieselsäure (HDKH 2000, Fa. Wacker).

Die Zubereitung wurde als Dichtungsmasse eingesetzt. Hierzu wurde die Zubereitung in Form einer Raupe auf den Flansch eines Gehäuses aufgetragen und die Dichtungsmasse 30 Sekunden mit einer Belichtungseinrichtung Delo-Lux 03 der Firma Delo-Industrieklebstoffe, München-Gräfelfing, bestrahlt und dabei ausgehärtet.

Auf diese Weise wurde eine flexible Dichtung mit sehr hoher Rückstellkraft erzeugt, die sich durch eine sehr hohe Beständigkeit gegenüber Hydraulikölen auszeichnet.

Die ausgehärtete Zubereitung besitzt eine ausgezeichnete Dehnbarkeit und eine Shore A-Härte von 41.

### Beispiel 3 (Zubereitung)

Es wurde eine lichtinitiiert härtende Zubereitung durch Vermischen folgender Bestandteile hergestellt:
- 31,5 % Prepolymer gemäß Beispiel 1
- 12,1 % Di-Urethan-dimethacrylat mit einer Molmasse von 2500 g/mol
- 35,4 % Isobornylacrylat
- 16,7 % Diacrylsäure
- 3,4 % γ-Glycidyloxypropyltrimethoxysilan
- 0,9 % Bisacylphosphinoxid

Die Zubereitung wurde als Glasklebstoff eingesetzt. Es konnten großflächige Verklebungen realisiert werden, die sich durch eine sehr gute Klimabeständigkeit auszeichneten. Insbesondere zeigten die Verklebungen auch bei mehrmaligen Temperaturwechseln von -20° auf 75°C kein adhäsives Versagen.

Bei der Bestimmung der Druckscherfestigkeit verklebter Glaskörper der Abmessungen 20 x 20 x 5 mm trat stets Glasbruch oberhalb einer Beanspruchung von 25 N/mm² auf.

### Beispiel 4

Es wurde eine zweikomponentige Zubereitung hergestellt, deren beide Komponenten aus folgenden Bestandteilen bestanden:

### Komponente 1

- 51,7 %, bezogen auf die Gesamtmasse der Komponente, des Prepolymeren gemäß Beispiel 1
- 17,7 % Hydroxypropylmethacrylat
- 2 % Gamma-Glycidyloxypropyltrimethoxysilan
- 10,4 % Dicyclopentenylethoxymethacrylat
- 12,3 % Ethylenglykolmonomethacrylatmonoacetat
- 3,9 % Diacrylsäure
- 1,5 % Bis-N,N(2-hydroxyethyl)-p-toluidin
- 0,5 % Diethylanilin

### Komponente 2

- 9,3 % Benzoylperoxid
- 8,9 % Dicyclohexylphthalat
- 2,1 % Poly(methylmethacrylat,-ethyl-acrylat)
- 50 % Methylethylketon
- 29,7 % Aceton

Mit der vorstehend beschriebenen Zubereitung bzw. ihren Komponenten wurden Verklebungen von Metall/Metall; Glas/Glas; Kunststoff/Kunststoff sowie die jeweils gemischten Paarungen ausgeführt, wobei eine "no-mix"-Applikation realisiert werden konnte.

Hierzu wurde ein Substrat oder wurden beide zu fügenden Substrate mit der Komponente 2 durch einmaligen Pinselauftrag bestrichen. Nach dem Abdunsten der Lösemittel konnte die Verklebung der Substrate mit der Komponente 1 entweder sofort oder nach längerer Lagerzeit der mit Komponente 2 aktivierten Substrate vorgenommen werden.

Die in der nachfolgenden Tabelle zusammengestellten Ergebnisse wurden an Substratpaarungen erzielt, bei denen jeweils nur ein Substrat mit der Komponente 2 behandelt wurde und die Verklebung 10 Minuten nach dem Auftrag der Komponente 2 erfolgte.

Die jeweils realisierten Klebschichtstärken wurden durch eingelegte Drähte auf 0,1 mm eingestellt. Die Verklebungen waren nach 4 bis 7 Minuten hantierbar und erreichten nach 24 Stunden die in der Tabelle zusammengestellten Festigkeitswerte.

Nach einer Stress-Behandlung der Verklebungen in 70°C heißem Wasser über einen Zeitraum von 6 Tagen wurde immer noch brauchbare Festigkeiten der Verklebung ermittelt.

Die durch Aushärtung erzeugten Klebfilme zeichneten sich durch eine sehr gute Flexibilität und hohes Rückstellvermögen aus.

| Fügepartner (Prüfkörper 20 x 20 x 5 mm) | Druckscherfestigkeit (N/mm²) | |
|---|---|---|
| | 24 Stunden nach der Verklebung ermittelt | Nach Einlagerung in 70°C heißem Wasser; 6 Tage |
| Glas/Glas | 21,5 | 12,1 |
| Alu/Alu | 20,7 | 10,3 |
| PMMA/PMMA | 13,4 | 7,8 |
| Glas/Alu | 17,3 | 5,7 |
| Glas/PMMA | 14,9 | 7,4 |
| Alu/PMMA | 19,3 | 7,1 |

### Beispiel 5 (Zubereitung)

Durch Mischung der nachfolgend aufgeführten Verbindungen wurde eine anaerob und lichtinduziert härtende Zubereitung hergestellt:
- 59,7 % Prepolymer gemäß Beispiel 1
- 15,6 % Triethylenglykoldimethacrylat
- 8,8 % PTHF-250-dimethacrylat
- 12,1 % Tetrahydrofurfurylmethacrylat
- 0,9 % Saccharin
- 1,2 % Cumolhydroperoxid
- 0,7 % N,N-Dimethyl-p-toluidin
- 1,0 % Bisacylphosphinoxid

Diese Zubereitung wurde zur Verklebung von Stahlblechen eingesetzt. Hierbei wurde die Zubereitung auf ein entfettetes 1,5 mm starkes Stahlblech aufgetragen, mit einem weiteren entfetteten 0,5 mm dicken Stahlblech gefügt, durch 30 Sekunden Belichtung eine Fixierung und Hantierbarkeit des Verbundes erreicht und der Verbund 24 Stunden bei Raumtemperatur belassen.

Danach wurde der 0,5 mm starke Blechstreifen im Winkel von 90°C über eine Rolle mit 20 mm Durchmesser abgeschält. Es wurde ein Schälwiderstand von 9,2 N/25 mm Streifenbreite gemessen.

## Patentansprüche

1. Prepolymere, nämlich acrylierte und/oder methacrylierte Mischpolyether der allgemeinen Formel 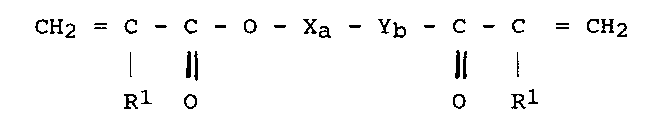 mit Molmassen von 4.000 bis 20.000,
worin
X und Y verschieden sind und jeweils eine Ethergruppe der Formel 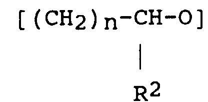 und
R¹ = H, Methyl
R² = H, Alkyl
n = eine ganze Zahl von 1 bis 5 und
a, b = jeweils eine ganze Zahl von 50 bis 500
bedeuten, wobei die Mischpolyether Tetramethylenoxy-Einheiten im Molekülgerüst enthalten, und zwar zu einem Anteil von 50 bis 95 Masse-%.

2. Prepolymere nach Anspruch 1, dadurch gekennzeichnet, daß sie Mischpolyethergerüste aus Ethylenoxid und Tetrahydrofuran besitzen, wobei das Molverhältnis dieser Monomeren 1 : 2,5 bis 1 : 5 beträgt.

3. Prepolymere nach Anspruch 2, gekennzeichnet durch ein Molverhältnis zwischen Ethylenoxid und Tetrahydrofuran von 1 : 3 bis 1 : 4.

4. Verfahren zur Herstellung der Prepolymere gemäß einem der Ansprüche 1 bis 3, dadurch gekennzeichnet, daß entsprechende Polyetherdiole mit Acrylsäure oder mit Methacrylsäureanhydrid im Verhältnis Diol : Säure oder Anhydrid von 1 : 1 bis 1 : 5 bei Temperaturen von 10 bis 120°C umgesetzt werden.

5. Verfahren nach Anspruch 4, dadurch gekennzeichnet, daß die Umsetzung bei einer Temperatur zwischen 20 und 50°C ohne Verdünnungsmittel in Gegenwart eines Katalysators durchgeführt wird.

6. Verfahren nach Anspruch 4 oder 5, dadurch gekennzeichnet, daß als Katalysator Natriummethacrylat in einer Konzentration von 0,05 bis 20 %, bezogen auf die Masse des Acylierungsmittels, eingesetzt wird.

7. Radikalisch polymerisierbare Zubereitung, insbesondere für das Verkleben, Abdichten, Vergießen und Beschichten von Substraten, gekennzeichnet durch einen Gehalt von 5 bis 99 %, bezogen auf die Gesamtmasse, an Prepolymeren gemäß einem der Ansprüche 1 bis 3.

8. Zubereitung nach Anspruch 7, dadurch gekennzeichnet, daß sie radikalisch polymerisierbare Säuremonomere, Vernetzermonomere und/oder Verdünnermonomere enthält.

9. Zubereitung nach Anspruch 7 oder 8, dadurch gekennzeichnet, daß sie Katalysatoren, Radikalbildner oder zur Bildung freier Radikale befähigte Redoxsysteme, Inhibitoren, Stabilisatoren, Haftvermittler und/oder weitere übliche Hilfs- und Zusatzstoffe enthält.

## Claims

1. Prepolymers, namely acrylized and/or methacrylized mixed polyethers having the general formula 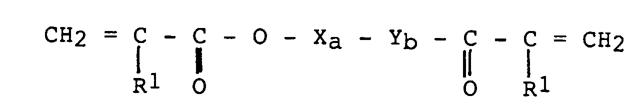 and having mole masses of from 4,000 to 20,000,
wherein
X und Y are different and each denote an ether group having the formula 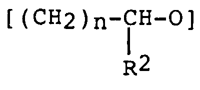 and
R¹ = H, methyl
R² = H, alkyl
n = an integer of from 1 to 5 and
a, b = an integer, each, of from 50 to 500,
with said mixed polyethers containing within their molecular skeleton tetramethyleneoxy units at a proportion of between 50 to 95% by weight.

2. Prepolymers according to claim 1, characterized in that said prepolymers have mixed polyether skeletons formed from ethylene oxide and tetrahydrofuran with the mole ratio of these monomers being from 1:2.5 to 1:5.

3. Prepolymers according to claim 2, characterized by a mole ratio of ethylene oxide and tetrahydrofuran of from 1:3 to 1:4.

4. Process for the preparation of the prepolymers of any one of claims 1 to 3, characterized in that corresponding polyetherdiols are reacted with acrylic acid or with methacrylic anhydride in a ratio of diol:acid or anhydride of from 1:1 to 1:5 at temperatures of from 10° to 120°C.

5. Process according to claim 4, characterized in that said reaction is carried out at a temperature of from 20° to 50°C in the presence of a catalyst with no thinner being present.

6. Process according to claim 4 or 5, characterized in that sodium methacrylate is used as said catalyst in a concentration of from .05 to 20 % of the weight of the acylating agent.

7. Radically polymerizable composition, especially for bonding, sealing, casting and coating of substrates, characterized by a content of from 5 to 99%, based on the total mass, of prepolymers according to any one of claims 1 to 3.

8. Composition according to claim 7, characterized in that it contains radically polymerizable acid monomers, crosslinking monomers and/or thinner monomers.

9. Composition according to claim 7 or 8, characterized in that it contains catalysts, radical-forming agents or redox systems capable of forming free radicals, inhibitors, stabilizers, adhesive coupling agents and/or other conventional auxiliary agents and additives.

## Revendications

1. Prépolymères, à savoir des coplyéthers acrylisés et/ou méthacrylisés de formule générale 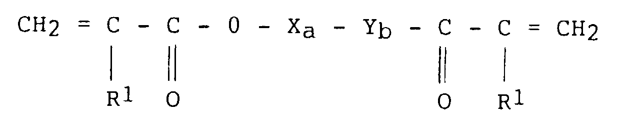 avec des masses molaires comprises entre 4.000 et 20.000, où
X et Y sont différents et sont respectivement un groupe éther de formule 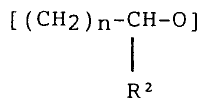 et
R¹ = H, méthyle,
R² = H, alkyle
n = un nombre entier de 1 à 5 et
a, b = respectivement un nombre entier de 50 à 500,
les copolyéthers contenant des unités de tétraméthylèneoxy dans l'édifice moléculaire, et cela dans une proportion de 50 à 95 % en masse.

2. Prépolymères selon la revendication 1, caractérisés en ce qu'ils possèdent des édifices d'éthers mixtes composés d'oxyde d'éthylène et de tétrahydrofurane, le rapport molaire de ces monomères allant de 1 : 2,5 à 1 : 5.

3. Prépolymères selon la revendication 2, caractérisés par un rapport molaire entre l'oxyde d'éthylène et le tétrahydrofurane allant de 1 : 3 à 1 : 4.

4. Procédé de réalisation des prépolymères selon l'une des revendications 1 à 3, caractérisé en ce que des polyétherdiols correspondants sont transformés avec de l'acide acrylique ou avec de l'anhydride d'acide méthacrylique selon un rapport diol : acide ou anhydride allant de 1 : 1 à 1 : 5 à des températures de 10 à 120 °C.

5. Procédé selon la revendication 4, caractérisé en ce que la transformation est effectuée à une température comprise entre 20 et 50 °C sans diluant en présence d'un catalyseur.

6. Procédé selon la revendication 4 ou 5, caractérisé en ce que, comme catalyseur, il est utilisé du méthacrylate de sodium à une concentration de 0,05 à 20 % rapporté à la masse de l'agent d'acylation.

7. Préparation polymérisable de façon radicalaire, en particulier pour le collage, l'étanchéisation, le scellement et le revêtement de substrats, caractérisée par une teneur de 5 à 99 %, rapportée à la masse totale, de prépolymères selon l'une des revendications 1 à 3.

8. Préparation selon la revendication 7, caractérisée en ce qu'elle contient des monomères d'acide, des monomères de réticulant et/ou des monomères de diluant polymérisables de façon radicalaire.

9. Préparation selon la revendication 7 ou 8, caractérisée en ce qu'elle contient des catalyseurs, des générateurs de radicaux ou des systèmes rédox capables de former des radicaux libres, des inhibiteurs, des stabilisateurs, des agents d'adhérence et/ou d'autres matières auxiliaires et d'addition usuelles.
